# EUROPÄISCHE PATENTSCHRIFT

(11) **EP 1 337 417 B1**
(45) Veröffentlichungstag und Bekanntmachung des Hinweises auf die Patenterteilung: **04.08.2004**
(21) Anmeldenummer: 01996475.8
(22) Anmeldetag: 13.11.2001
(51) Int. Cl.: B60N 2/08

(54) **KRAFTFAHRZEUGSITZ**
MOTOR VEHICLE SEAT
SIEGE DE VEHICULE AUTOMOBILE

(30) Priorität: 15.11.2000 DE 10057712
(43) Veröffentlichungstag der Anmeldung: 27.08.2003
(73) Patentinhaber: Brose Fahrzeugteile GmbH & Co. KG, Coburg, 96450 Coburg (DE)
(72) Erfinder: RAUSCH, Peter, 96489 Niederfüllfach (DE); SUCK, Wolfgang, 96450 Coburg (DE); SCHWERDTNER, Christina, 96465 Neustadt (DE)
(74) Vertreter: Baumgärtel, Gunnar, Dr.
(86) Internationale Anmeldenummer: PCT/DE2001/004275
(87) Internationale Veröffentlichungsnummer: WO 2002/040309

(56) Entgegenhaltungen:
- DE-A- 3 608 827
- DE-A- 4 201 829

## Beschreibung

Die Erfindung betrifft einen Kraftfahrzeugsitz nach dem Oberbegriff des Patentanspruchs 1.

Derartige Sitze umfassen ein Sitzgestell, eine auf dem Sitzgestell vorgesehene Sitzfläche und eine Rückenlehne, die schwenkbar an dem Sitzgestell gelagert und die in Richtung auf die Sitzfläche vorklappbar ist und werden als Vordersitze in Kraftfahrzeugen eingesetzt, wobei durch das Vorklappen der Rückenlehne das Einsteigen eines Passagiers oder das Einschieben eines Gegenstandes in den Fond des Kraftfahrzeugs erleichtert werden soll. Eine zusätzliche Erleichterung beim Einsteigen, die bei zweitürigen Kraftfahrzeugen von Bedeutung ist, wird dabei dadurch erreicht, daß der Sitz nach dem Vorklappen der Rückenlehne nach vorne verschoben werden kann. Hierzu weist der Kraftfahrzeugsitz weiterhin folgendes auf:
eine Längsführung, mit der das Sitzgestell zur Einstellung der Sitzlängsposition in Sitzlängsrichtung bewegbar ist;
eine Feststellvorrichtung zum Arretieren des Sitzgestells in einer zuvor eingestellten Sitzlängsposition;
ein Betätigungselement zum Entriegeln der Feststellvorrichtung, so daß das Sitzgestell in Sitzlängsrichtung bewegbar ist;
einen Koppelmechanismus zur Kopplung der Feststellvorrichtung mit der Rückenlehne, der auf das Betätigungselement einwirkt und dadurch die Feststellvorrichtung entriegelt, wenn die Rückenlehne in Richtung auf die Sitzfläche vorgeklappt ist;
eine Memory-Einrichtung, mittels der das Sitzgestell bei einer Bewegung in Sitzlängsrichtung automatisch in einer vorgebbaren, als Memory-Position definierten Sitzlängsposition angehalten werden kann, wobei ein dem Sitzgestell zugeordneter, in Sitzlängsrichtung bewegbarer Anschlag mit einem Gegenanschlag der Memory-Einrichtung in Eingriff tritt;
Einstellmittel der Memory-Einrichtung, mit denen die Memory-Position durch Verschieben der Position des Gegenanschlages in Sitzlängsrichtung einstellbar ist;
eine Verriegelungsvorrichtung der Memory-Einrichtung zum Verriegeln einer eingestellten Memory-Position und
Schaltmittel, mit denen die Verriegelungsvorrichtung entriegelbar ist, um die Memory-Position einstellen zu können.

Ein solcher, aus der WO 00/55002 bekannter Sitz bietet zum einen die Möglichkeit, nach dem Vorklappen der Rückenlehne in Richtung auf die Sitzfläche das Sitzgestell, und somit den gesamten Fahrzeugsitz, nach vorne zu verschieben, um das Einsteigen eines Passagieres in den Fond zu erleichtern (Easy-Entry-Funktion). Gleichzeitig kann der Sitz anschließend sehr einfach wieder in seine ursprüngliche Sitzlängsposition verschoben werden, wenn diese Sitzlängsposition mittels der hierfür vorgesehenen Memory-Einrichtung als Memory-Position gespeichert ist. In diesem Fall wird das Sitzgestell beim Zurückschieben des Sitzes automatisch in der Memory-Position angehalten, wobei ein dem Sitzgestell zugeordneter Anschlag mit einem Gegenanschlag der Memory-Einrichtung zusammenwirkt.

Der Erfindung liegt das Problem zugrunde, einen Kraftfahrzeugsitz der eingangs genannten Art weiter zu verbessern.

Dieses Problem wird erfindungsgemäß durch die Schaffung eines Kraftfahrzeugsitzes mit den Merkmalen des Patentanspruchs 1 gelöst.

Danach ist ein durch den Koppelmechanismus bewegbares erstes Eingriffselement vorgesehen, dem ein an der Memory-Einrichtung angeordnetes zweites Eingriffselement zugeordnet ist, wobei die beiden Eingriffselemente miteinander in Eingriff stehen, um eine Bewegung des Sitzgestells in Sitzlängsrichtung zu verhindern, wenn
a) das Sitzgestell sich in seiner Memory-Position befindet,
b) die Verriegelungsvorrichtung der Memory-Einrichtung verriegelt ist und
c) die Feststellvorrichtung der Längsführung mittels des Koppelmechanismus noch nicht vollständig, aber bereits soweit entriegelt ist, daß eine Bewegung des Sitzgestells in Sitzlängsrichtung möglich wäre.

Unter dem Sitzgestell werden dabei vorliegend jeweils sämtliche in Sitzlängsrichtung bewegbare Bestandteile der tragenden Sitzkonstruktion verstanden, also insbesondere auch diejenigen Bestandteile der Sitzlängsführung, wie z.B. eine Sitzschiene (Oberschiene), die bei einer Einstellung der Sitzlängsposition in Längsrichtung bewegt werden.

Mit der erfindungsgemäßen Lösung können unangenehme Geräusche vermieden werden, die auftreten, wenn ein Fahrgast beim Betätigen der Easy-Entry-Funktionen die Lehne nicht weit genug nach vorne klappt bzw. das Sitzgestell bereits zu verschieben versuchen, wenn die Lehne noch nicht weit genug in Richtung auf die Sitzfläche vorgeklappt ist. Ein Verschieben des Sitzgestells bei nicht hinreichend vorgeklappter Rückenlehne und damit nicht vollständig entriegelter Feststellvorrichtung der Längsführung führt in der Regel dazu, daß verschiedene Bauteile der Feststellvorrichtung aneinander schleifen und dadurch die erwähnten Geräusche erzeugen. Diese können von einem Fahrzeuginsassen unter Umständen sogar als Folge eines Defektes der Sitzverstelleinrichtung gedeutet werden, so daß auf eine mangelhafte Qualität der Fahrzeugsitzes geschlossen werden könnte.

Mit der erfindungsgemäßen Lösung wird eine Bewegung des Sitzgestells bei noch nicht vollständig entriegelter Feststellvorrichtung verhindert, da ein an der Memory-Einrichtung vorgesehenes Eingriffselement derart mit einem am Koppelmechanismus vorgesehenen Eingriffselement zusammenwirkt, daß eine Verschiebung des Sitzgestells unmöglich ist. Hierbei kann das erste Eingriffselement unmittelbar an dem Koppelmechanismus selbst angeordnet sein, z.B. an einem Hebel, der zum Einwirken des Koppelmechanismus auf die Feststellvorrichtung vorgesehen ist. Das zweite Eingriffselement ist vorzugsweise an der Verriegelungsvorrichtung der Memory-Einrichtung angeordnet.

Die Verriegelungsvorrichtung der Memory-Einrichtung besteht vorzugsweise aus einer zusammen mit einem die Memory-Position definierenden Gegenanschlag der Memory-Einrichtung in Sitzlängsrichtung verschiebbaren Verriegelungseinheit und einer der Verriegelungseinheit zugeordneten Rasteinrichtung, die in Sitzlängsrichtung hintereinander angeordnete Raststellen aufweist, an denen die Verriegelungseinheit bezüglich der Rasteinrichtung zur Fixierung der Memory-Position verriegelbar ist.

Die Verriegelungseinheit kann beispielsweise eine schwenkbar gelagerte Sperrklinke umfassen, die ein Rastelement aufweist, das in die Raststellen der Rasteinrichtung einrastbar ist, wobei die Sperrklinke mit einem Betätigungsabschnitt versehen ist, auf den Schaltmittel einwirken können, um das Rastelement in die Rasteinrichtung einrasten bzw. aus dieser ausrasten zu lassen. Bei einer derartigen Verriegelungsvorrichtung kann das zweite Eingriffselement insbesondere an der Sperrklinke der Verriegelungsvorrichtung angeordnet sein.

Die Eingriffselemente selbst können in einfacher Weise jeweils durch Anschläge gebildet werden, die zur Herstellung des Eingriffs miteinander in Kontakt bringbar sind. So kann es sich bei einem der Eingriffselemente um eine Klaue handeln, die das andere Eingriffselement zur Herstellung eines Eingriffs umgreift.

Die Feststellvorrichtung kann in bekannter Weise Sperrzähne umfassen, von denen zum Arretieren der Sitzlängsführung bzw. des Sitzgestells mindestens einer in eine Rastöffnung einführbar ist, die zu einer Gruppe von in Sitzlängsrichtung entlang der Längsführung hintereinander angeordneter Rastöffnungen gehört. Bei Verwendung einer derartigen, üblichen Feststellvorrichtung stehen die beiden Eingriffselemente erfindungsgemäß immer dann miteinander in Eingriff, um eine Bewegung des Sitzgestells mittels der Längsführung in Sitzlängsrichtung zu verhindern, wenn die Sperrzähne mittels des Koppelmechanismus bereits soweit aus den Rastöffnungen ausgehoben sind, daß das Sitzgestell in Sitzlängsrichtung verschiebbar wäre, wobei jedoch die Sperrzähne über die Ränder der Rastöffnungen schleifen würden, weil die Sperrzähne noch nicht vollständig aus den Rastöffnungen ausgehoben sind (noch keine vollständige Entriegelung des Feststellvorrichtung).

Bei einer vollständigen Entriegelung der Feststellvorrichtung sollen die beiden Eingriffselemente demgegenüber nicht mehr im Eingriff stehen, so daß eine Einstellung der Sitzlängsposition ohne weiteres möglich ist.

Die erfindungsgemäße Lösung läßt sich nicht nur auf Sitze mit Easy-Entry-Funktion anwenden, sondern gemäß Anspruch 14 allgemein auf Sitze, die einen (insbesondere als Betätigungshebel ausgebildeten, manuell bedienbaren) Auslösemechanismus aufweisen, der zum Entriegeln der Feststellvorrichtung der Sitzlängsführung dient.

Es ist vorgesehen, daß der Koppelmechanismus, der auf das Betätigungselement der Feststellvorrichtung einwirkt und diese entriegelt, wenn die Rückenlehne in Richtung auf die Sitzfläche vorgeklappt ist, nur so lange auf das Betätigungselement einwirkt, wie die Rückenlehne vorgeklappt ist. Somit ist das Sitzgestell jederzeit durch Verriegeln der Feststellvorrichtung arretierbar, wenn die Rückenlehne nicht mehr vorgeklappt ist, also wieder in ihre Funktionsposition zurückgeklappt wurde. Dies bedeutet insbesondere, daß bei hochgeklappter Rückenlehne die Arretierbarkeit des Sitzgestells in einer aktuellen Sitzlängsposition unabhängig davon ist, ob die jeweilige Sitzlängsposition der Memory-Position entspricht.

Dies führt einerseits zu einer Erhöhung des Bedienkomforts, da die Variabilität hinsichtlich der nach Ausführung der Easy-Entry-Funktion einstell- und arretierbaren Sitzlängspositionen vergrößert wird. Gleichzeitig wird die Funktionssicherheit verbessert, da der Sitz auch dann arretierbar ist, wenn er sich nicht in der Memory-Position befindet, so daß kein Sicherheitsrisiko als Folge eines nicht hinreichend gesicherten Sitzes auftreten kann.

In einer bevorzugten Ausführungsform der Erfindung sind außerdem Sperrmittel vorgesehen, die mit der Rückenlehne gekoppelt sind und die bei vorgeklappter Rückenlehne derart auf die zur Entriegelung der Verriegelungsvorrichtung der Memory-Einrichtung vorgesehenen Schaltmittel einwirken, daß bei vorgeklappter Rückenlehne eine Entriegelung der Verriegelungsvorrichtung verhindert wird. Dies bedeutet, daß bei vorgeklappter Rückenlehne die Verriegelungsvorrichtung der Memory-Einrichtung stets verriegelt ist, so daß keine Veränderung der Memory-Position erfolgen kann.

Die Sperrmittel können beispielsweise über ein Schubmittel oder ein Zugmittel, insbesondere in Form eines Seiles, mit der Rückenlehne gekoppelt sein. Zur Kopplung kann jedoch auch eine Hebelanordnung oder ein sonstiges Getriebe verwendet werden.

Es ist lediglich erforderlich, daß die zur Kopplung verwendeten Mittel geeignet sind, eine Schwenkbewegung der Rückenlehne in eine Bewegung eines Sperrelementes umzusetzen und dieses in eine Position zu bringen, in der es eine Entriegelung der Verriegelungsvorrichtung der Memory-Einrichtung blockiert.

Die Sperrmittel können dabei mit der Rückenlehne über denselben Koppelmechanismus gekoppelt sein wie das Betätigungselement, das bei vorgeklappter Rückenlehne eine Entriegelung der Feststellvorrichtung der Sitzlängsführung bewirkt.

Um ein Sperrelement der Sperrmittel mit den Schaltmitteln in Eingriff zu bringen, kann z.B. vorgesehen sein, daß das Sperrelement beim Vorklappen der Rückenlehne in Sitzlängsrichtung verschoben wird. Alternativ kann eine Schwenkbewegung des Sperrelementes beim Vorklappen der Rückenlehne oder auch eine andere Form der Bewegung vorgesehen sein.

Das Sperrelement weist z.B. einen Anschlag auf, der beim Vorklappen der Rückenlehne mit den Schaltmitteln in Wirkverbindung tritt, um dadurch eine Entriegelung der Verriegelungsvorrichtung der Memory-Einrichtung zu blockieren. Alternativ kann das Sperrelement auch mit den Schaltmitteln verbunden sein und beim Vorklappen der Rückenlehne derart auf die Schaltmittel einwirken, daß hierdurch eine Entriegelung der Verriegelungsvorrichtung verhindert wird.

Die zum Entriegeln der Verriegelungsvorrichtung der Memory-Einrichtung vorgesehenen Schaltmittel können beispielsweise durch einen Schalthebel oder durch eine Schaltfeder gebildet werden, wobei ersterer zum Entriegeln der Verriegelungsvorrichtung verschwenkt und letzterer hierzu deformiert wird. Ebenso ist ein verschiebliches Schaltmittel verwendbar.

Die Schaltmittel werden vorzugsweise an dem Sitzgestell gelagert und sind derart angeordnet, daß sie nur dann zum Entriegeln auf die Verriegelungsvorrichtung einwirken können, wenn sich das Sitzgestell in der Memory-Position befindet. Dies bedeutet, daß eine Veränderung der Memory-Position, die ja eine Entriegelung der Verriegelungsvorrichtung voraussetzt, nur dann vorgenommen werden kann, wenn sich das Sitzgestell in der aktuellen Memory-Position befindet.

In einer vorteilhaften Weiterbildung sind die Schaltmittel in Richtung einer ersten Schaltposition elastisch vorgespannt und entgegen der Wirkung dieser Vorspannung in eine zweite Schaltposition schaltbar, wobei in einer der beiden Schaltpositionen die Verriegelungsvorrichtung verriegelt und in der anderen Schaltposition die Verriegelungsvorrichtung entriegelt ist.

In einer Ausführungsform der Erfindung sind die Schaltmittel mit der Feststellvorrichtung der Sitzlängsführung gekoppelt, wenn sich das Sitzgestell in der Memory-Position befindet, und können daher beim Betätigen der Feststellvorrichtung gleichzeitig geschaltet werden.

Nach einer Variante werden hierbei die Schaltmittel beim Entriegeln der Feststellvorrichtung derart geschaltet, daß die Verriegelungsvorrichtung entriegelt wird. Dies bedeutet, daß bei einem Entriegeln der Feststellvorrichtung der Sitzlängsführung in der Memory-Position gleichzeitig auch die Verriegelungsvorrichtung der Memory-Einrichtung entriegelt wird, so daß eine neue Memory-Position eingestellt werden kann. Hierbei kann jedoch durch die oben erwähnten Sperrmittel sichergestellt werden, daß dies nur dann möglich ist, wenn sich die Rückenlehne nicht in der vorgeklappten Position befindet. Denn bei einem Verschieben des Sitzes zum Zwecke eines erleichterten Einstiegs in das Kraftfahrzeug soll ja in der Regel keine Veränderung der Memory-Position vorgenommen werden.

Nach einer anderen Variante werden die Schaltmittel beim Verriegeln der Feststellvorrichtung der Sitzlängsführung derart geschaltet, daß die Verriegelungsvorrichtung der Memory-Einrichtung entriegelt wird. Bei dieser Variante werden also die zu einer Änderung der Memory-Position vorgesehenen Einstellmittel der Memory-Einrichtung bei einem Verriegeln der Feststellvorrichtung der Sitzlängsführung automatisch freigeschaltet. Wenn dann anschließend die Feststellvorrichtung wieder entriegelt wird, um das Sitzgestell in Sitzlängsrichtung verschieben zu können, kann hierbei zugleich auch eine Korrektur der Memory-Position stattfinden. Selbstverständlich kann auch hier mittels der oben erwähnten Sperrmittel bewirkt werden, daß die Freischaltung der Einstellmittel der Memory-Einrichtung nur bei nicht vorgeklappter Rückenlehne möglich ist.

Weiter kann vorgesehen sein, daß in der Memory-Position des Sitzgestells bei nicht vorgeklappter Rückenlehne und bei entriegelter Verriegelungsvorrichtung der Memory-Einrichtung die Schaltmittel derart abgestützt werden, daß bei einem Entriegeln der Feststellvorrichtung die Schaltmittel nicht geschaltet werden. Hierzu können sich die Schaltmittel beispielsweise an einer Stützfläche abstützen oder auch mittels eines elastischen Elementes in eine bestimmte Position vorgespannt werden.

Um zu verhindern, daß beim Anfahren der Memory-Position automatisch die Einstellmittel der Memory-Einrichtung freigeschaltet werden, mit der Folge, daß bei einer anschließenden Verstellung der Sitzlängsposition zugleich auch die Memory-Position verändert würde, kann vorgesehen sein, daß die Schaltmittel beim Anfahren der Memory-Position mit nicht vorgeklappter Rückenlehne zunächst deaktiviert werden und dadurch ein sofortiges Entriegeln der Verriegelungsvorrichtung der Memory-Einrichtung blockiert wird. Bei einem anschließenden Verriegeln der Feststellvorrichtung können die Schaltmittel dann derart betätigt werden, daß sie wieder zum Entriegeln auf die Verriegelungsvorrichtung der Memory-Einrichtung einwirken können. Dies kann insbesondere dadurch bewirkt werden, daß die Verriegelungsvorrichtung bei einem anschließenden Entriegeln der Feststellvorrichtung automatisch entriegelt wird.

Um die Schaltmittel beim Anfahren der Memory-Position mit nicht vorgeklappter Rückenlehne zu deaktivieren, kann vorgesehen sein, daß den Schaltmitteln eine Führungsfläche der Memory-Einrichtung zugeordnet ist und daß diese Führungsfläche derart ausgebildet ist, daß die Schaltmittel beim Anfahren der Memory-Position entlang der Führungsfläche geführt werden und dadurch nicht auf die Verriegelungsvorrichtung einwirken können. Bei einem anschließenden Verriegeln der Feststellvorrichtung können die Schaltmittel dann automatisch derart betätigt werden, daß sie wieder von der Führungsfläche abgehoben werden. Bei einer daran anschließenden erneuten Entriegelung der Feststellvorrichtung (mit nicht vorgeklappter Rückenlehne) können dann die Schaltmittel wieder auf die Verriegelungsvorrichtung der Memory-Einrichtung einwirken, um deren Einstellmittel freizuschalten.

In einer anderen Ausführungsform ist den Schaltmitteln eine Anschlagfläche der Memory-Einrichtung zugeordnet, die derart angeordnet ist, daß sie beim Anfahren der Memory-Position mit nicht vorgeklappter Rückenlehne auf die Schaltmittel einwirkt, um ein Entriegeln der Verriegelungsvorrichtung durch die Schaltmittel zu verhindern. Bei einem anschließenden Verriegeln der Feststellvorrichtung werden die Schaltmittel dabei derart betätigt, daß sie wieder von der Anschlagfläche abgehoben werden.

In einer bevorzugten Weiterbildung der Erfindung ist die Verriegelungsvorrichtung der Memory-Einrichtung in Richtung auf ihre verriegelte Stellung elastisch vorgespannt und die Schaltmittel können in der Memory-Position bei nicht vorgeklappter Rückenlehne derart auf die Verriegelungsvorrichtung einwirken, daß diese entgegen der elastischen Vorspannung entriegelt wird.

Um bei einer Einstellung der Sitzlängsposition zugleich auch eine Anpassung der Memory-Position vornehmen zu können, weist die Memory-Einrichtung einen Mitnehmer auf, der mit dem Sitzgestell in Eingriff bringbar ist, so daß der Gegenanschlag und die Verriegelungseinheit der Memory-Einrichtung zusammen mit dem Sitzgestell in Sitzlängsrichtung verschoben werden können. Dem Mitnehmer ist hierzu ein Eingriffsbereich des Sitzgestelles zugeordnet und der Mitnehmer ist mit dem Eingriffsbereich z.B. dadurch in Eingriff bringbar, daß Mitnehmer und Eingriffsbereich relativ zueinander verschwenkt werden.

Der Mitnehmer und der Eingriffsbereich sind vorzugsweise nur dann miteinander in Eingriff bringbar, wenn sich das Sitzgestell in der Memory-Position befindet und wenn die Verriegelungsvorrichtung der Memory-Einrichtung entriegelt ist. Der Mitnehmer selbst kann beispielsweise an der Sperrklinke angeordnet sein.

Die Einstellmittel, mit denen die Memory-Position einstellbar ist, können vorteilhaft durch einen Gleiter gebildet werden, der in Sitzlängsrichtung beweglich gelagert ist und an dem die Verriegelungseinheit sowie der Gegenanschlag der Memory-Einrichtung angeordnet sind.

Weitere Merkmale und Vorteile der Erfindung werden bei der nachfolgenden Beschreibung von Ausführungsbeispielen anhand der Figuren deutlich werden.

Es zeigen:
- Fig. 1 -: eine perspektivische Darstellung eines Teiles eines Sitzgestells mit einer Sitzlängsführung, mit einer Feststellvorrichtung der Sitzlängsführung, mit einem Sitzseitenteil, an dem eine Rückenlehne schwenkbar gelagert ist, sowie mit einer programmierbaren Memory-Einrichtung zum automatischen Auffinden einer vorgebbaren Sitzlängsposition, und zwar bei einem Sitzgestell, das sich mit in Gebrauchsposition befindlicher (hochgeklappter) Rückenlehne in seiner Memory-Position befindet, wobei die Feststellvorrichtung verriegelt ist;
- Fig. 2 -: eine Darstellung gemäß Figur 1 nach einem teilweisen Vorklappen der Rückenlehne aus ihrer Gebrauchsposition, aber bevor die Rückenlehne vollständig auf die Sitzfläche geklappt ist;
- Fig. 3 -: ein Detail aus Figur 2;
- Fig. 4 -: eine Seitenansicht des Details gemäß Figur 3;
- Fig. 5 -: das Detail gemäß den Figuren 3 und 4 nach dem vollständigen Vorklappen der Rückenlehne auf die Sitzfläche;
- Fig. 6 -: eine perspektivische Darstellung eines aus dem Stand der Technik bekannten Sitzgestells mit einer Sitzlängsführung, einer Feststellvorrichtung der Sitzlängsführung sowie einer programmierbaren Memory-Einrichtung zum automatischen Auffinden einer vorgebbaren Sitzlängsposition, in einem Zustand, in dem der Sitz mit hochgeklappter Rückenlehne in seiner Memory-Position verriegelt ist;
- Fig. 6a -: eine Rückansicht der Darstellung aus Figur 6;
- Fig. 7 -: eine Darstellung gemäß Figur 6 in einem Zustand, in dem die Rückenlehne nach vorne geklappt ist, um den Sitz mit vorgeklappter Rückenlehne verschieben zu können;
- Fig. 8 -: eine Darstellung gemäß Figur 6 in einem Zustand, in dem bei hochgeklappter Rückenlehne in der Memory-Position ein Betätigungshebel betätigt wurde, um die Memory-Position neu einzustellen;
- Fig. 9 -: eine Darstellung gemäß Figur 6 in einem Zustand, in dem die Memory-Position des Sitzes mit hochgeklappter Rückenlehne angefahren wird;
- Fig. 10 -: eine Darstellung gemäß Figur 6 in einem Zustand, in dem die Memory-Position des Sitzes mit hochgeklappter Rückenlehne erreicht wird;
- Fig. 11 -: eine schematische Darstellung eines Sitzgestells.

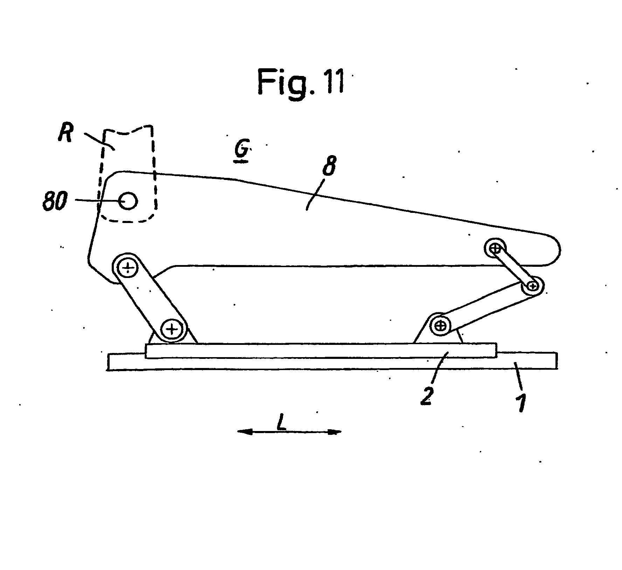

Das in Figur 11 in einer Seitenansicht dargestellte Sitzgestell G (Sitzuntergestell) umfaßt eine Sitzschiene 2, die in Sitzlängsrichtung L beweglich auf einer an der Fahrzeugkarosserie zu befestigenden Unterschiene 1 lagert, und ein Sitzseitenteil 8, das über vordere und hintere Gelenkhebel höhenverstellbar an der Sitzschiene 2 angelenkt ist. Auf seiner anderen, in Figur 11 nicht erkennbaren Längsseite weist das Sitzgestell G eine entsprechende Anordnung auf. Zwischen den beiden Sitzseitenteilen des Sitzgestelles G erstreckt sich eine Sitzfläche, die ein Sitzpolster aufnimmt, auf dem ein Fahrzeuginsasse Platz nehmen kann.

Ferner weisen die Seitenteile 8 des Sitzgestelles G jeweils eine Lagerstelle 80 zur schwenkbaren Lagerung einer in Figur 11 gestrichelt angedeuteten Rückenlehne R auf.

Vorliegend werden als Teile des Sitzgestell jeweils alle diejenigen Bauteile verstanden, die auf der karosseriefesten Unterschiene 1 in Sitzlängsrichtung bewegbar sind, also insbesondere die Sitzschiene 2, das Sitzseitenteil 8 sowie die hiermit verbundenen weiteren Bauteile des Sitzes.

Wird ein derartiger in Längsrichtung L verstellbarer Fahrzeugsitz für ein zweitüriges Fahrzeug verwendet, so ist es bekannt, zur Erleichterung des Einstiegs in den Fond des Fahrzeugs die Lehne an die Sitzlängsverstellung zu koppeln und zwar derart, daß bei einem Vorklappen der Rückenlehne R in Richtung auf die sich zwischen den Sitzseitenteilen 8 erstreckende Sitzfläche eine der Sitzlängsführung 1, 2 zugeordnete Feststellvorrichtung entriegelt wird und der Sitz mit vorgeklappter Rückenlehne vorgeschoben werden kann. Es handelt sich hierbei um eine sogenannte Easy-Entry-Funktion.

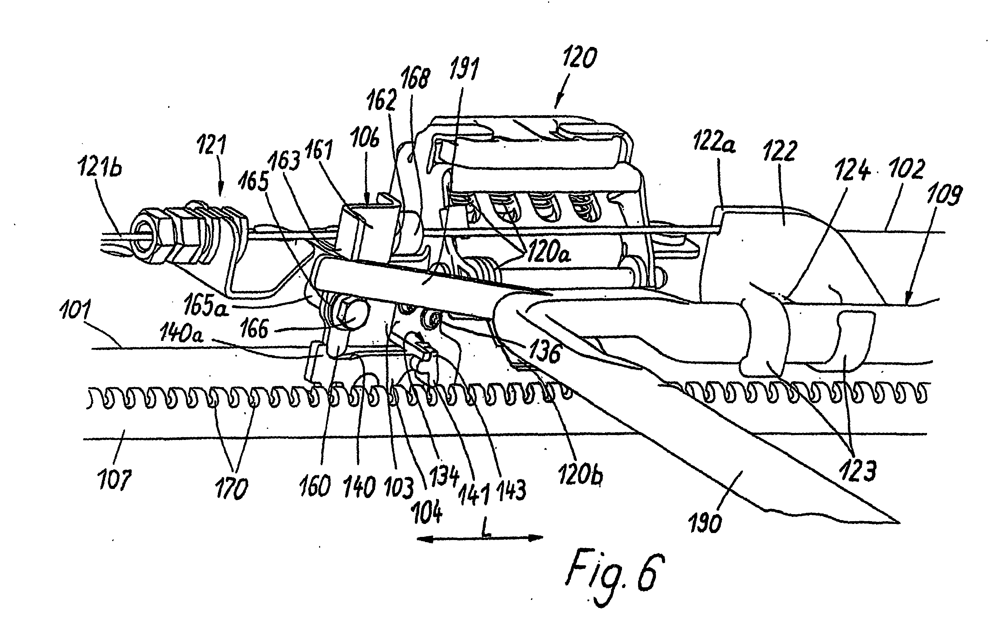

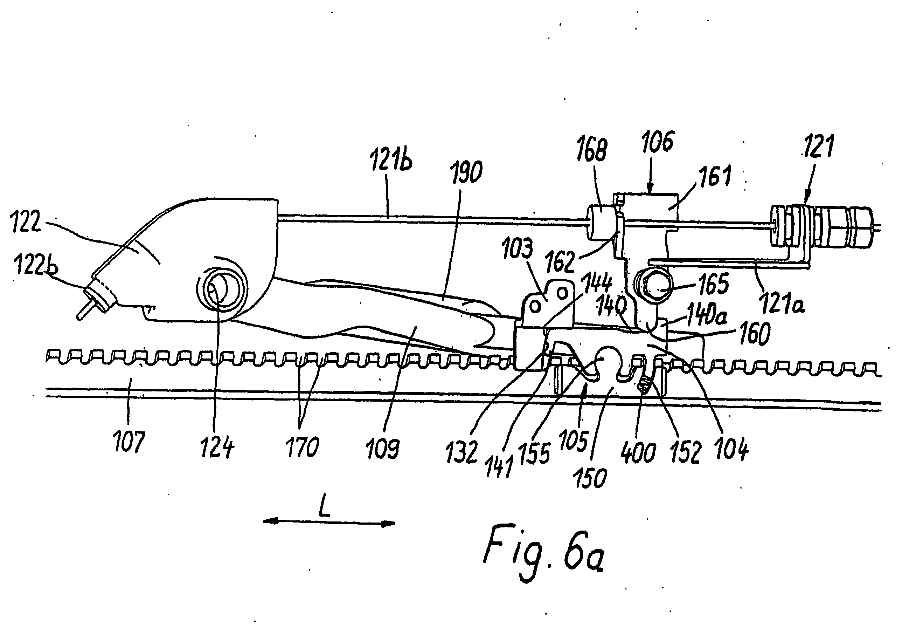

Im folgenden wird zunächst anhand einer in den Figuren 6 bis 10 dargestellten und aus der WO 00/55002 bekannten Sitzanordnung das Grundprinzip der Easy-Entry-Funktion bei Verwendung einer programmierbaren Memory-Einrichtung zum automatischen Auffinden einer vorgebbaren Sitzlängsposition erläutert. Für weitere Einzelheiten hierzu wird auf die Beschreibung der WO 00/55002 verwiesen.

In der perspektivischen Vorderansicht gemäß Figur 6 sowie der zugehörigen Rückansicht gemäß Figur 6a sind eine karosseriefeste Schiene 101 und eine daran in Sitzlängsrichtung L beweglich geführte Sitzschiene 102 dargestellt, wobei an der karosseriefesten Schiene 101 eine Rastschiene 107 mit einer Vielzahl in Sitzlängsrichtung L hintereinander angeordneter Rastöffnungen 170 befestigt ist. Die Sitzschiene 102 trägt die übrigen Komponenten des Sitzgestelles, vergl. Figur 11.

Die Sitzschiene 102 ist bezüglich der karosseriefesten Schiene 101 mittels einer Feststellvorrichtung 120 arretierbar. Hierbei kann es sich um eine übliche Feststellvorrichtung für eine Sitzlängsverstellung handeln. In den Figuren 6 und 6a sind das Gehäuse, ein schwenkbar gelagertes Betätigungselement 120b sowie eine auf das Betätigungselement 120b einwirkende Drehfeder einer bekannten Feststellvorrichtung dargestellt, deren Gehäuse an der Sitzschiene 2 befestigt ist. Die Drehfeder dient u.a. der Herausnahme von Spiel aus der Anordnung, um Klappergeräusche zu verhindern.

Diese Feststellvorrichtung umfaßt beispielsweise gemäß der DE 299 10 720 U1 eine Mehrzahl innerhalb des Gehäuses angeordneter Sperrzähne, die - mittels in dem Gehäuse gelagerter Federn in Form von Schraubenfedem - elastisch in Richtung auf eine an der karosserieseitigen Schiene 1 befestigte, in den Figuren 6 und 6a nicht erkennbare, Rasteinrichtungen vorgespannt sind. Aufgrund der auf die Sperrzähne wirkenden Vorspannung rasten die der Sitzschiene 102 zugeordneten Sperrzähne automatisch in die karroseriefeste Rasteinrichtung ein, so daß die Sitzlängsverstellung arretiert ist, wenn nicht mittels des hierfür vorgesehenen Betätigungselementes 120b die Sperrzähne außer Eingriff mit der Rasteinrichtung gebracht sind.

Da das Betätigungselement 120b der Feststellvorrichtung 120 mittels der Federanordnung 120a, die aus den innerhalb des Gehäuses angeordneten, auf die Sperrzähne einwirkenden Federn sowie der außerhalb des Gehäuses angeordneten Drehfeder besteht, entgegen der Richtung vorgespannt ist, in die es zum Entriegeln der Feststellvorrichtung 120 verschwenkt werden muß, kann die Feststellvorrichtung 120 nur dann entriegelt werden, wenn auf deren Betätigungselement 120b eine Kraft entgegen der Wirkung der Federanordnung 120a ausgeübt wird.

Zum Entriegeln der Feststellvorrichtung 120 kann das Betätigungselement 120b einerseits von einem Sitzbenutzer unmittelbar dadurch betätigt werden, daß dieser einen am Sitzgestell schwenkbar angelenkten, ein Querrohr 190 aufweisenden Betätigungshebel 109 an einem hierfür vorgesehenen (in den Figuren 6 und 6a nicht erkennbaren) Betätigungsgriff 190 ergreift und diesen entgegen dem Uhrzeigersinn verschwenkt, wodurch sich das Betätigungselement 120b entgegen der Vorspannung der Federanordnung 120a nach unten bewegt. Zum anderen kann die Feststellvorrichtung 120 auch durch Vorklappen der Sitzlehne entriegelt werden, wozu die Sitzlehne über einen Bowdenzug, der ein Seil 121b aufweist und dessen (nicht dargestellter) Bowden sich an einer Bowdenabstützung 121 abstützt, mit dem Betätigungshebel 109 gekoppelt ist. Ferner ist auf der Schwenkachse des Betätigungshebels 109 mittels eines Achsstummels 124 ein Getriebeteil 122 gelagert, das eine Führung 122a sowie eine Einhängung 122b für das Seil 121b des Bowdenzugs aufweist. Dieses Getriebeteil 122 setzt eine Straffung des Seiles 121b bei einem Vorklappen der Rückenlehne in eine Schwenkbewegung um, die wiederum durch zwei Arme 123 des Getriebes, welche den Betätigungshebel 109 umgreifen, auf diesen übertragen wird. Hierdurch verschwenkt der Betätigungshebel 109 bei einem Vorklappen der Rückenlehne im Uhrzeigersinn und entriegelt über das Betätigungselement 120b die Feststellvorrichtung 120.

Auf dem Seil 121b des Bowdenzugs ist zudem zwischen der Bowdenabstützung 121, die mittels eines Befestigungsbleches 121a an der Sitzschiene befestigt ist, und dem Getriebe 122 ein Seilnippel 168 befestigt, z.B. durch Verquetschen. Dem Seilnippel 168 ist ein Schaltelement in Form eines Schalthebels 106 zugeordnet, das mittels einer Lagerbuchse 165, eines Stufenbolzens 165a sowie einer Schraube 166 um eine durch die Längsachse des Stufenbolzens 165a gebildete Achse verschwenkbar gelagert und gleichzeitig an dem Sitzgestell bzw. dessen Sitzschiene 102 befestigt ist. Der Schalthebel 106 weist in einem oberen Abschnitt 161 einen Anschlag 162 auf, der unmittelbar neben dem Seilnippel 168 angeordnet ist und auf den der Seilnippel 168 in Sitzlängsrichtung einwirken kann, wodurch der Schalthebel 106 verschwenkt wird.

Der unterhalb der Lagerbuchse 165 sowie des Stufenbolzens 165a angeordnete zweite Endabschnitt des Schalthebels 106 bildet einen Betätigungsabschnitt 160, dem ein Betätigungsabschnitt einer Sperrklinke 104 der Memory-Einrichtung zugeordnet ist. Der Betätigungsabschnitt der Sperrklinke 104 wird dabei durch eine Betätigungsfläche 140 auf der Oberseite der Sperrklinke gebildet.

Der Schalthebel 106 ist vorliegend durch einen Fortsatz 191 des Betätigungshebels 109, auf dem sich der obere Abschnitt 161 des Schalthebels 106 mit einem Anschlag 163 vertikal (quer zur Sitzlängsrichtung L) abstützt, in der in den Figuren 6 und 6a gezeigten Position arretiert, in der dessen Betätigungsabschnitt 160 auf die Betätigungsfläche 140 der Sperrklinke 104 einwirkt. Das hierfür erforderliche Moment wird durch die Federanordnung 120a der Feststellvorrichtung 120 aufgebracht, die über das Betätigungselement 120b sowie den Betätigungshebel 109 auf den Hebelfortsatz 191 wirkt.

Alternativ oder zusätzlich kann die senkrechte Stellung des Schalthebels 106 auch durch eine unmittelbar dem Schalthebel 106 angeordnete Feder oder dadurch unterstützt werden, daß der Schalthebel 106 mit hinreichend Reibung gelagert ist, die durch die Wirkung der Druckfeder 400 der Sperrklinke 104 nicht überwunden werden kann.

Die Sperrklinke 104 selbst ist, wie insbesondere anhand Fig. 6a erkennbar, schwenkbar auf einem Lagerzapfen 155 eines Gleiters 105 gelagert, der mit einem Grundkörper 150 in Sitzlängsrichtung L beweglich neben den Rastöffnun-gen 170 der Rastschiene 107 geführt ist. Der Gleiter weist in seinem Grundkörper 150 eine Ausnehmung 152 auf, in der eine Druckfeder 400 angeordnet ist, die unterhalb des Betätigungsabschnittes 140 der Sperrklinke 104 auf diese einwirkt und dadurch die Sperrklinke 104 derart vorspannt, daß ein am anderen Ende der Sperrklinke 104 angeordneter Rasthaken 141 die Tendenz hat, in die Rastschiene 107 einzugreifen. Hieran wird in dem in den Figuren 6 und 6a dargestellten Zustand, in dem der Sitz mit nicht vorgeklappter Rückenlehne in der Memory-Position verriegelt ist, die Sperrklinke dadurch gehindert, daß der Betätigungsabschnitt 160 des Schalthebels 106 sich auf der Betätigungsfläche 140 der Sperrklinke 104 abstützt, so daß diese nicht um den Lagerzapfen 155 verschwenken kann, um den Rasthaken 141 mit der Rastschiene 107 in Eingriff zu bringen.

In dem in den Figuren 6 und 6a dargestellten Zustand befindet sich ferner ein Gegenanschlag 144 der Sperrklinke 104 in Kontakt mit einem Anschlag 132 eines Anschlagselementes 103, das mit Befestigungsschrauben 136 an der Sitzschiene 102 befestigt ist. Ferner befindet sich ein Mitnehmer 143 der Sperrklinke 104, der sich nach oben hin an den Anschlag 144 anschließt, in Eingriff mit einem Eingriffsbereich 134 des Anschlagselementes 103.

Wird in dem in den Fig. 6 und 6a dargestellten Zustand des Sitzes, in dem dieser in der Memory-Position verriegelt ist, die Rückenlehne nach vorne geklappt, so spannt sich das Seil 121b des Bowdenzuges und bewegt sich in Richtung auf das hintere (rückenlehnenseitige) Sitzende.

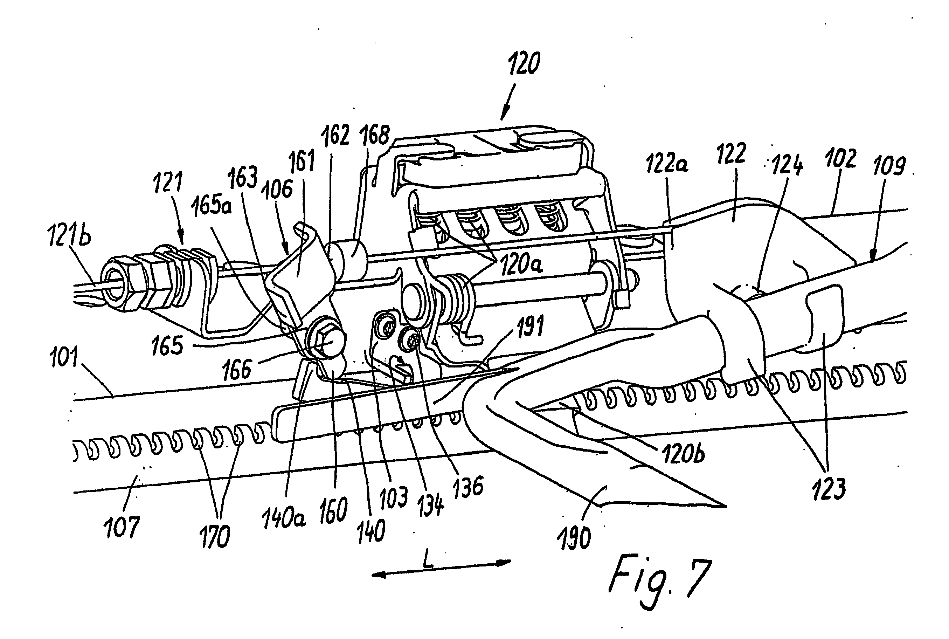

Hierdurch wird gemäß Fig. 7 zum einen der Betätigungshebel 109 über das Getriebeteil 122 sowie die Arme 123 entgegen dem Uhrzeigersinn verschwenkt, wobei er auf das Betätigungselement 120b einwirkt und die Feststellvorrichtung 120 entriegelt. Zum anderen bewegt sich der mit dem Seil 121b verquetschte Seilnippel 168 in Richtung des hinteren Sitzendes und wirkt dabei auf den Anschlag 162 im oberen Abschnitt 161 des Schalthebels 106 ein. Dabei wird der Schalthebel 106 entgegen dem Uhrzeigersinn verschwenkt, wobei dessen Betätigungsabschnitt 160 von der zugeordneten Betätigungsfläche 140 der Sperrklinke 104 abgehoben wird. Diese Schwenkbewegung des Schalthebels 106 ist möglich, da dieser nicht mehr durch den Hebelfortsatz 191 blockiert wird, der ja gemeinsam mit dem Betätigungshebel 109 nach unten verschwenkt wurde. Dadurch, daß der Schalthebel 106 die Sperrklinke 104 freigegeben hat, verschwenkt diese nun aufgrund der Wirkung der Druckfeder 400 (vergl. Fig. 6a) um den Lagerzapfen 155 des Gleiters 105, bis der Rasthaken 141 in eine Öffnung 170 der Rastschiene 107 eingreift. Hierbei wird die Sperrklinke 104 und somit insgesamt die Memory-Einrichtung verriegelt.

Die Schwenkbewegung der Sperrklinke 104 hat zudem die Folge, daß der Mitnehmer 143 der Sperrklinke 104 sowie der Eingriffsbereich 134 des Anschlagselementes 103 außer Eingriff geraten. Dies ist erforderlich, um das Sitzgestell verschieben zu können, da anderenfalls eine Bewegung des Sitzes durch die verriegelte Memory-Einrichtung blockiert würde.

Der Seilnippel 168 dient dabei hier als Sperrmittel, welches bei vorgeklappter Rückenlehne derart auf den Schalthebel 106 einwirkt, daß die Sperrklinke 104 nicht mittels des Schalthebels 106 entriegelt werden kann.

Die Anordnung ist derart ausgelegt, daß beim Vorklappen der Rückenlehne der Rasthaken 141 unter der Wirkung der Druckfeder 400 bereits in eine Rastöffnung 170 eingreifen kann, bevor die Feststellvorrichtung 120 soweit entriegelt ist, daß die Sitzschiene 102 bezüglich der karosseriefesten Schiene 101 verschiebbar ist. Hierdurch wird eine zuverlässige Speicherung der aktuellen Sitzlängsposition als Memory-Position gewährleistet. Sofern allerdings der Rasthaken 141 nicht unmittelbar in eine Rastöffnung 170 eingreifen kann, weil der Sitz derart positioniert ist, daß der Rasthaken 141 unter der Wirkung der Druckfeder 400 auf einem Steg zwischen zwei Rastöffnungen 170 aufschlägt, dann rastet der Rasthaken 141 erst nach einer geringfügigen Verschiebung des Sitzgestells in Sitzlängsrichtung L in die nächste Rastöffnung 170 ein, die er passiert. In einem solchen Fall ergibt sich also eine geringfügige Abweichung zwischen der Sitzlängsposition beim Vorklappen der Rückenlehne und der anschließend gespeicherten Memory-Position.

In dem in Fig. 7 gezeigten Zustand, der durch das Vorklappen der Rückenlehne erreicht wurde, kann das Sitzgestell nun mit vorgeklappter Rückenlehne in Sitzlängsrichtung L nach vorne verschoben werden, um den Einstieg eines Passagiers oder das Einschieben eines Gegenstandes in den Fond eines Kraftfahrzeugs zu erleichtern.

Wird der Sitz dann mit vorgeklappter Rückenlehne wieder nach hinten bewegt, so wird er spätestens in der durch die Sperrklinke 104 definierten Memory-Position automatisch angehalten. Denn beim Erreichen der Memory-Position gerät der Anschlag 132 des Sitzgestells mit dem Anschlag 144 der Memory-Einrichtung in Kontakt, wodurch eine weitere Bewegung des Sitzgestelles nach hinten verhindert wird.

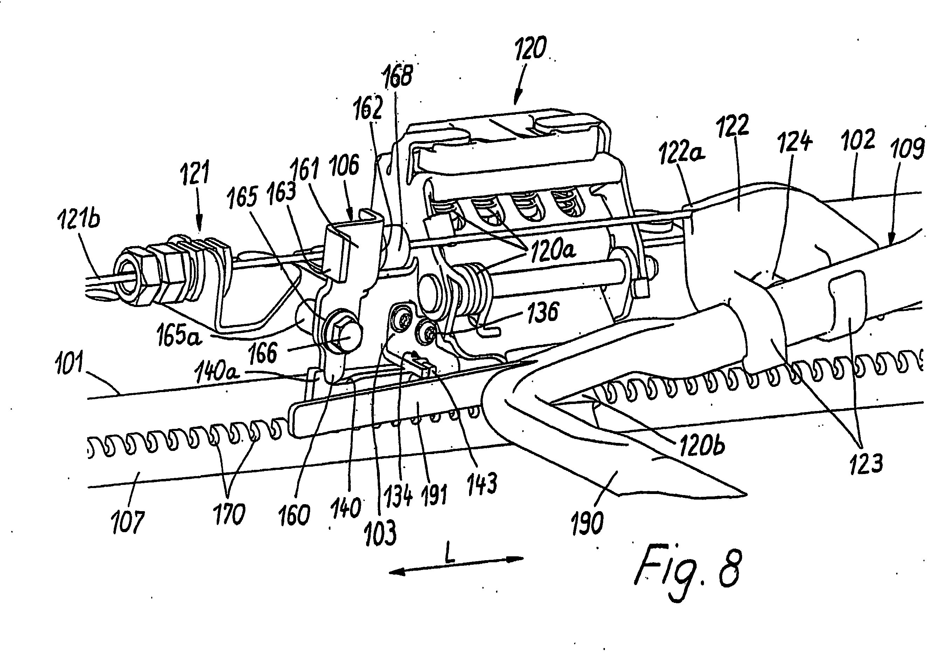

Wird sodann die Rückenlehne wieder in ihre Funktionsposition geklappt, dann löst sich die Spannung des Seiles 121b, und der Schalthebel 106 sowie der Betätigungshebel 109 mit dem daran befestigten Fortsatz 191 kehren zurück in die in den Fig. 6 und 6a dargestellte Lage. Wird sodann der Betätigungshebel 109 entgegen dem Uhrzeigersinn verschwenkt, um die Feststellvorrichtung 120 zu entriegeln, so stellt sich der in Fig. 8 gezeigte Zustand ein.

Beim manuellen Verschwenken des Betätigungshebels 109 mittels eines hierfür vorgesehenen Betätigungsgriffes wird zwar die Feststellvorrichtung 120 über das Betätigungselement 120b entriegelt, so daß das Sitzgestell in Sitzlängsrichtung L auf der karosseriefesten Schiene 101 bewegt werden kann; jedoch bleibt hierbei - im Unterschied zu einem Vorklappen der Rückenlehne - der Schalthebel 106 in seiner senkrechten Position, in der dessen Betätigungsabschnitt 160 vertikal auf die Betätigungsfläche 140 einwirkt. Hierdurch wird verhindert, daß die Sperrklinke 104 unter der Wirkung der Druckfeder 400 verriegelt wird.

Wegen des gemäß Fig. 8 nach unten verschwenkten Hebelfortsatzes 191, der dementsprechend nicht an dem zugeordneten Anschlag 163 des Schalthebels 106 anliegt, muß die vertikale Stellung des Schalthebels 106 beispielsweise durch eine geeignete Ausbildung der Betätigungsfläche 140 der Sperrklinke 104 gesichert werden. Die Betätigungsfläche 140 kann hierzu derart gekrümmt sein, daß sie unter der Wirkung der Druckfeder 400 der Sperrklinke 104 auf den Betätigungsabschnitt 160 des Schalthebels 106 kein Moment ausübt, das eine Schwenkbewegung des Schalthebels 106 entgegen dem Uhrzeigersinn zur Folge hätte. Mit anderen Worten ausgedrückt, muß das Zusammenspiel der Betätigungsfläche 140 der Sperrklinke 104 mit dem Betätigungsabschnitt 160 des Schalthebels 106 derart ausgelegt sein, daß durch die mittels der Druckfeder 400 von der Sperrklinke 104 her eingeleiteten Kräfte keine Schwenkbewegung des Schalthebels 106 entgegen dem Uhrzeigersinn ausgelöst wird. Eine Schwenkbewegung des Schalthebels 106 im Uhrzeigersinn wird demgegenüber durch den Seilnippel 168 blockiert.

Alternativ kann die senkrechte Stellung des Schalthebels 106 - wie bereits oben erwähnt - auch mittels eines geeigneten Federelementes oder durch hinreichend große Reibungskräfte gesichert werden.

Zusammenfassend führt die Betätigung des Betätigungshebels 109 in der Memory-Position des Sitzes (bei nicht vorgeklappter Rückenlehne) dazu, daß einerseits die Feststellvorrichtung 120 entriegelt wird, während gleichzeitig die Sperrklinke 104 und somit die Memory-Einrichtung insgesamt in dem entriegelten Zustand verbleibt, der bereits vor dem Verschwenken des Betätigungshebels 109 bestand, vergl. Figuren 6 und 6a. Außerdem greift der Mitnehmer 143 der Memory-Einrichtung in den Eingriffsbereich 134 des sitzschienenseitigen Anschlagselementes 103 ein.

In diesem Zustand führt eine Bewegung des Sitzgestelles in Sitzlängsrichtung L dazu, daß gleichzeitig die Sperrklinke 140 mitgenommen wird, so daß beim Verschieben des Sitzes zugleich auch eine neue Memory-Position eingestellt wird. Die neu eingestellte Memory-Position, die der durch Verschiebung des Sitzgestelles neu eingestellten Sitzlängsposition entspricht, wird jedoch nicht schon dann verriegelt, wenn schließlich der Betätigungshebel 109 losgelassen wird. Denn dies hat gemäß den Figuren 6 und 6a zunächst nur zur Folge, daß die Feststellvorrichtung 120 verriegelt wird und somit die Sitzschiene 102 bezüglich der karosseriefesten Schiene 101 arretiert ist. Eine Verriegelung der Memory-Einrichtung erfolgt demgegenüber gemäß Fig. 7 erst dann, wenn in der neuen Sitzlängsposition die Sitzlehne vorgeklappt wird. Sonach wird bei dem vorliegenden Ausführungsbeispiel die Memory-Einrichtung immer nur dann verriegelt, wenn der Sitz mit vorgeklappter Rückenlehne im Rahmen der Easy-Entry-Funktion nach vorne bewegt wird.

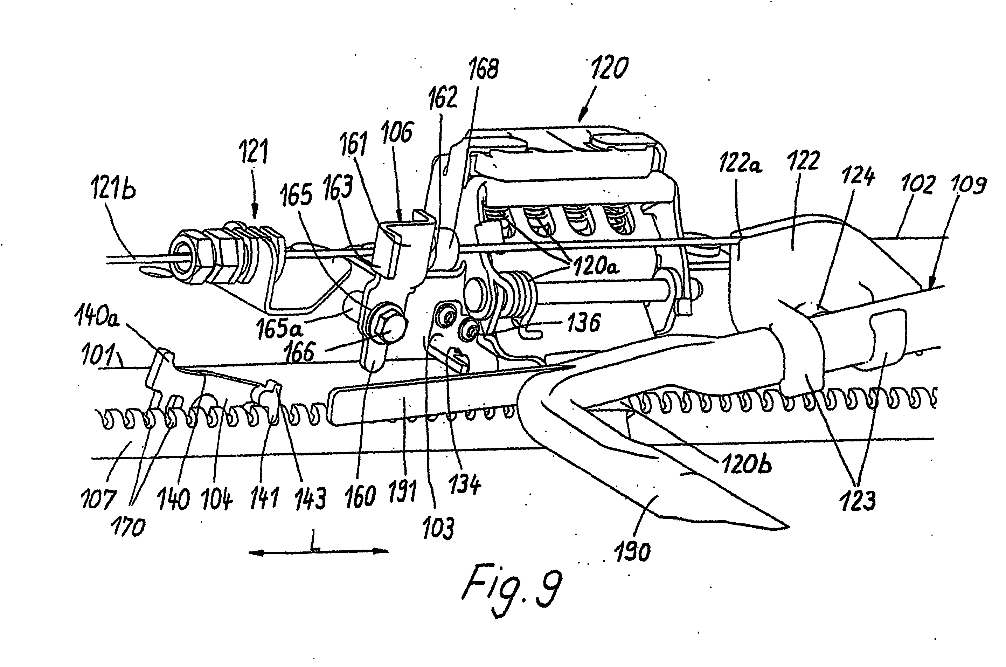

In Fig. 9 ist das Sitzgestell gezeigt, nachdem es zunächst mit vorgeklappter Rückenlehne in Sitzlängsrichtung L nach vorne verschoben wurde, wobei die Sperrklinke 104 verriegelt in der ursprünglichen Sitzposition zurückgelassen worden ist, und nachdem anschließend die Rückenlehne wieder in ihre Funktionsposition geklappt wurde. Außerdem ist der Betätigungshebel 109 derart verschwenkt, daß die Feststellvorrichtung 120 entriegelt ist und das Sitzgestell in Sitzlängsrichtung wahlweise nach vorne oder nach hinten verstellt werden kann. In jeder Sitzlängsposition, die hierbei erreicht wird, kann das Sitzgestell mittels der Feststellvorrichtung 120 bezüglich der karosseriefesten Schiene 1 arretiert werden, indem der Betätigungshebel 109 losgelassen wird.

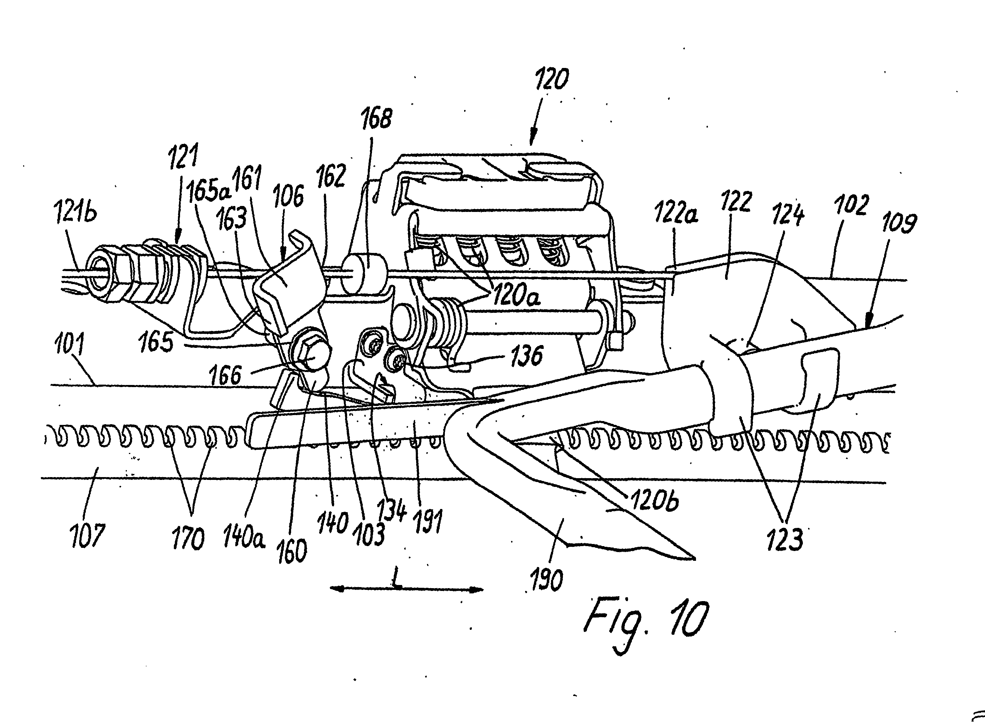

Fig. 10 zeigt schließlich den Zustand des Sitzgestells, wenn dieses mit aufgerichteter Rückenlehne bis in die Memory-Position zurückgefahren wird. Hierbei schlägt der Schalthebel 106 mit seinem Betätigungsabschnitt 160 an einem Vorsprung 140a an, der von der Betätigungsfläche 140 der Sperrklinke 104 vertikal nach oben absteht. Dies ist darauf zurückzuführen, daß sich die Sperrklinke 104 in dem verriegelten Zustand befindet, in dem sie mit ihrem Rasthaken 141 (vergl. Fig. 6a) in eine Rastöffnung 170 der Rastschiene 107 eingreift. Durch die hiermit verbundene Schrägstellung der Betätigungsfläche 140 der Sperrklinke 104 übt diese auf den Betätigungsabschnitt 160 des Schalthebels 106 ein Drehmoment mit einer Komponente parallel zur Sitzlängsrichtung L aus. Als Folge davon wird der Schalthebel 106 entgegen dem Uhrzeigersinn verschwenkt und dessen Betätigungsabschnitt 160 gerät in Anschlag mit dem Vorsprung 140a der Sperrklinke 104. Dies bewirkt, daß die Sperrklinke 104 weiterhin verriegelt bleibt, wenn das Sitzuntergestell die in Fig. 10 gezeigte Memory-Position erreicht.

Zusammenfassend wirkt demnach die Betätigungsfläche 140 im verriegelten Zustand der Sperrklinke 104 derart mit dem Betätigungsabschnitt 160 des Schalthebels 106 zusammen, daß dieser verschwenkt wird, wenn der Sitz mit aufgerichteter Rückenlehne in die Memory-Position geschoben wird, wodurch eine Entriegelung der Sperrklinke 104 verhindert wird. (Wenn der Sitz mit vorgeklappter Rückenlehne nach hinten in die Memory-Position geschoben wird, dann ist der Schalthebel 106 aufgrund der Wirkung des Seilnippels 168 ohnehin verschwenkt, vergl. Fig. 7, so daß auch in diesem Fall keine Entriegelung der Memory-Einrichtung erfolgen kann.) Andererseits wirken die Betätigungsfläche 140 der Sperrklinke 104 und der Betätigungsabschnitt 160 des Schalthebels 106 im entriegelten Zustand der Sperrklinke 104, vergl. Fig. 6, derart zusammen, daß die Sperrklinke 104 entriegelt bleibt, wie weiter oben anhand Fig. 6 näher ausgeführt wurde.

Wegen des verriegelten Zustandes der Sperrklinke 104 wird das Sitzgestell beim Erreichen der Memory-Position automatisch angehalten, wenn der Anschlag 132 des sitzgestellseitigen Anschlagselementes 103 mit dem Gegenanschlag 144 der Memory-Einrichtung (vergl. Fig. 6a) auf Block fährt.

Wird dann in der Memory-Position der Betätigungshebel 109 losgelassen, so wird dieser unter der Wirkung der Federanordnung 120a der Feststellvorrichtung 120 im Uhrzeigersinn verschwenkt, bis die Feststellvorrichtung 120 wieder verriegelt ist. Gleichzeitig wird durch den Fortsatz 191 des Betätigungshebels 109, der auf den abgewinkelten Anschlag 163 im oberen Abschnitt 161 des Schalthebels 106 einwirkt, der Schalthebel 106 im Uhrzeigersinn in seine senkrechte Stellung verschwenkt, wobei der Schalthebel 106 mit seinem Betätigungsabschnitt 160 auf die Betätigungsfläche 140 der Sperrklinke 104 einwirkt und diese (entgegen der Wirkung der Druckfeder 400) entriegelt (was eine entsprechende Auslegung der Federanordnung 120a erfordert). Der Sitz befindet sich dann wieder in dem anhand der Figuren 6 und 6a erläuterten Zustand mit hochgeklappter Rückenlehne in der Memory-Position.

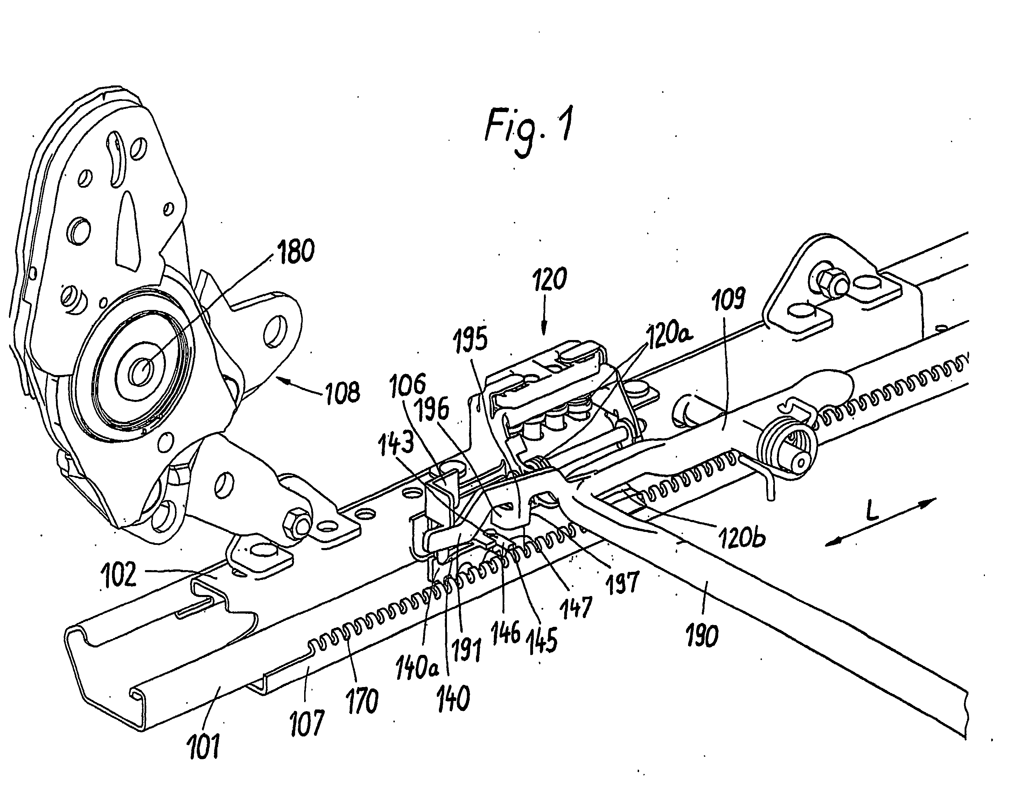

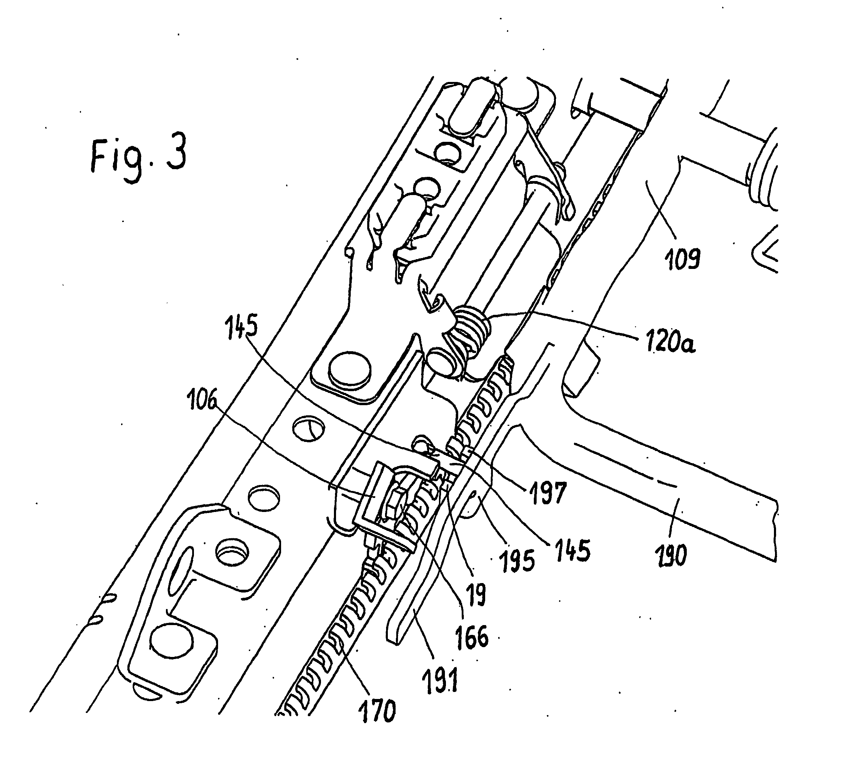

Es wird nun anhand der Figuren 1 bis 5 eine Weiterentwicklung der in den Figuren 6 bis 10 dargestellten Anordnung entsprechend der Erfindung beschrieben. Dabei werden für übereinstimmende Bauteile jeweils dieselben Bezugszeichen verwendet, so daß zur Erläuterung der entsprechenden Bauteile jeweils auf die Ausführungen zu den Figuren 6 bis 10 verwiesen wird. Die nachfolgende Beschreibung der Figuren 1 bis 5 beschränkt sich daher auf die Diskussion der Unterschiede zu der anhand der Figuren 6 bis 10 dargestellten Anordnung.

In den Figuren 1 bis 5 wurde der besseren Übersichtlichkeit halber auf die Darstellung solcher Details verzichtet, die für die erfindungsgemäße Weiterbildung nicht von Bedeutung sind. Auch diesbezüglich wird auf die Erläuterungen zu den Figuren 6 bis 10 verwiesen.

Figur 1 zeigt (wie erwähnt, unter Auslassung einiger Einzelheiten) eine Weiterbildung der in Figur 6 dargestellten Sitzanordnung, und zwar ebenfalls in einem Zustand, in dem der Sitz mit hochgeklappter Rückenlehne in seine Memory-Position verriegelt ist. Zusätzlich

ist in Figur 1 noch ein an der Sitzschiene 102 vorgesehenes, höhenverstellbares Sitzseitenteil 108 mit einem Lager 180 zur schwenkbaren Aufnahme einer Rückenlehne erkennbar.

Der wesentliche Unterschied gegenüber dem in Figur 6 gezeigten Ausführungsbeispiel besteht darin, daß gemäß Figur 1 von dem Hebelfortsatz 191 des Betätigungshebels 109 eine Klaue 195 mit zwei in Sitzlängsrichtung L voneinander beabstandeten seitlichen Anschlägen 196, 197 abragt. Dieser Klaue ist ein Fortsatz 145 des an der Sperrklinke 104 vorgesehenen Mitnehmers 143 zugeordnet, der ebenfalls zwei in Sitzlängsrichtung voneinander beabstandete Anschläge 146, 147 aufweist. Die Klaue 195 und der Fortsatz 145 dienen als Eingriffselemente, die miteinander in Eingriff gebracht werden können, um eine Bewegung der Sitzschiene 102 bezüglich der karosserieseitigen Schiene 101 zu verhindern.

In dem in Figur 1 dargestellten Zustand, in dem die Sitzschiene 102 (und damit das Sitzgestell) bei hochgeklappter Rückenlehne bezüglich der karosserieseitigen Schiene 101 in der Memory-Position verriegelt ist, befinden sich die beiden Eingriffselemente 195, 145 außer Eingriff.

Wird nun in diesem Zustand die Rückenlehne des Sitzes nach vorne in Richtung auf die Sitzfläche geklappt (vergleiche Figur 11), um die Easy-Entry-Funktion auszulösen, so verschwenken sowohl die Sperrklinke 104 als auch der Hebelfortsatz 191 um ihre jeweilige Schwenkachse. Hierdurch gerät der Fortsatz 145 des Mitnehmers 143 in Eingriff mit der Klaue 195, und zwar genau in dem Zustand, in dem die Rückenlehne noch nicht soweit auf die Sitzfläche geklappt ist, daß die Feststellvorrichtung 120 vollständig entriegelt ist.

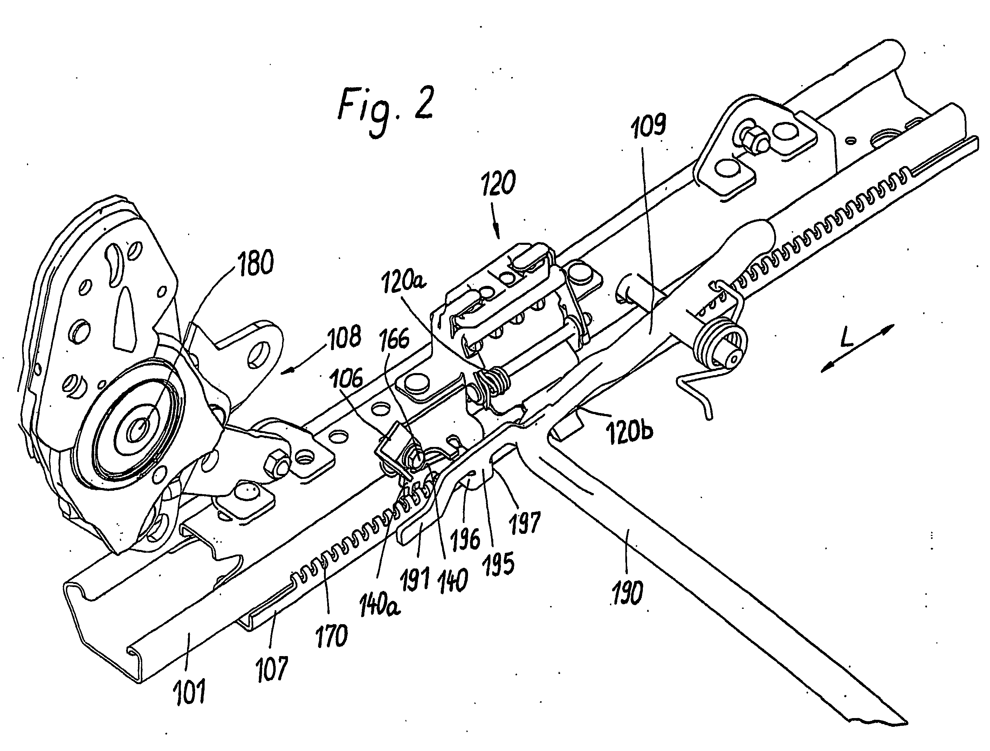

In diesem, in den Figuren 2 bis 4 dargestellten Zustand ist der Hebelfortsatz 191 noch nicht vollständig nach unten verschwenkt, und die an diesem Hebelfortsatz 191 vorgesehene Klaue 195 umgreift mit ihren seitlichen Anschlägen 196, 197 das Eingriffselement 145 des Mitnehmers 143, wobei jedem der Anschläge 146, 147 des Eingriffselementes 145 genau ein Anschlag 196 bzw. 197 der Klaue 195 zugeordnet ist.

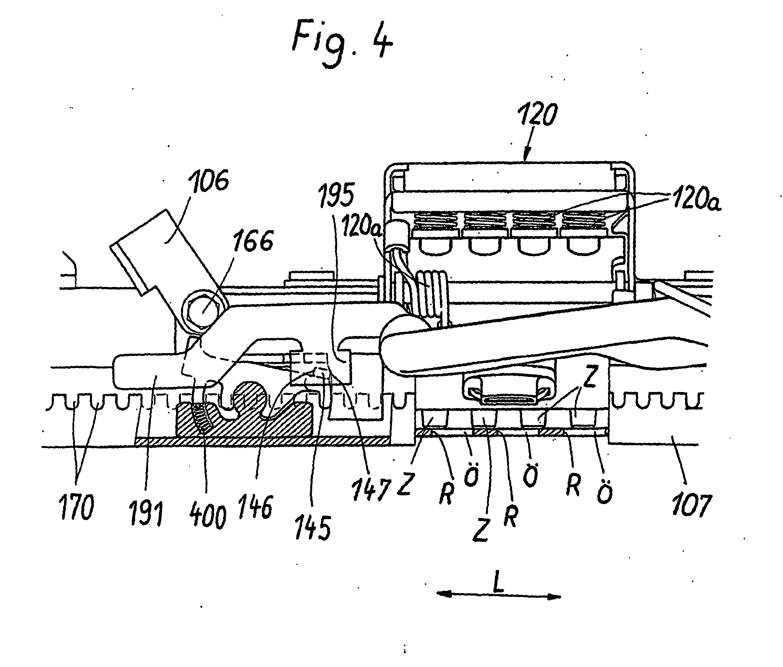

Wie insbesondere anhand Figur 4 erkennbar ist, sind in diesem Zustand die Sperrzähne Z der Feststellvorrichtung 120 bereits soweit aus den zugeordneten Rastöffnungen Ö ausgehoben, daß eine Bewegung der beiden Schienen 101, 102 in Sitzlängsrichtung L zueinander möglich wäre. Die Entriegelung der Feststellvorrichtung 120 ist jedoch noch nicht vollständig erfolgt; denn die Sperrzähne Z würden bei der genannten Bewegung in Sitzlängsrichtung über die Ränder R der Rastöffnungen Ö schleifen, was zu unangenehmen Geräuschen führen würde.

Eine derartige Relativbewegung der beiden Sitzschienen 101, 102 wird vorliegend jedoch dadurch ausgeschlossen, daß die Klaue 195 das Eingrisffelement 145 des an der Sperrklinke 104 vorgesehenen Mitnehmers 143 umgreift. Denn die Klaue 195 ist an dem Hebelfortsatz 191 angeformt, der wiederum einen Bestandteil des an der sitzseitigen Schiene 102 angelenkten Betätigungshebels 109 bildet. Das Eingrifsselement 145 des Mitnehmers 143 ist demgegenüber an der Sperrklinke 104 vorgesehen, die bereits in die Rastöffnungen 170 der zugeordneten Rastschiene 107 eingreift und somit bezüglich der karosserieseitigen Schiene 101 verriegelt ist. Es greifen hier also zwei Eingriffselemente 145, 195 ineinander, von denen eines, nämlich das am Mitnehmer 143 ausgebildete Eingriffselement 145, an der karosserieseitigen Schiene 101 vorgesehen ist, und von denen das andere, nämlich das als Klaue 195 ausgebildete Eingriffselement, an der sitzseitigen Schiene 102 vorgesehen ist. Hierdurch ist eine Bewegung dieser beiden Schienen 101, 102 zueinander in Sitzlängsrichtung L unmöglich.

Entscheidend hierfür ist, daß in dem Zustand, in dem die Sperrzähne Z der Feststellvorrichtung 120 gerade so weit aus den zugeordneten Rastöffnungen Ö ausgerastet sind, daß eine schleifende Bewegung in Sitzlängsrichtung L möglich wäre, die Sperrklinke 104 bereits unter der Wirkung des Federelementes 400 (Druckfeder) in die Rastschiene 107 eingreift. Dies wird dadurch erreicht, daß der Schalthebel 106 in diesem Zustand bereits hinreichend verschwenkt ist, um die Sperrklinke 104 freizugeben.

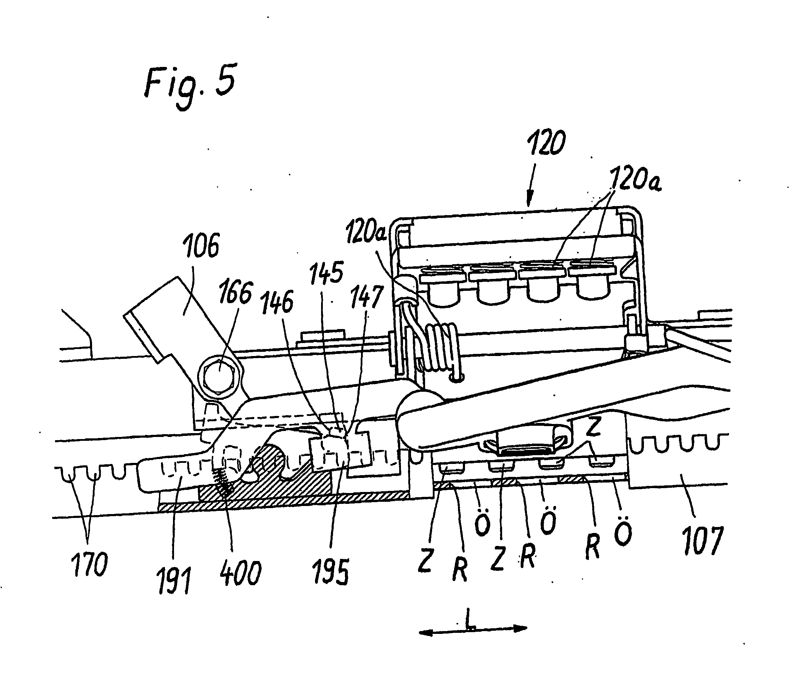

Anhand Figur 5 ist schließlich erkennbar, daß nach dem vollständigen Entriegeln der Feststellvorrichtung 120, also nachdem die Sperrzähne Z vollständig aus den zugeordneten Rastöffnungen Ö ausgehoben sind, das an der Sperrklinke 104 vorgesehene Eingriffselement 145 sich oberhalb der Klaue 195 befindet, so daß nun einer Relativbewegung von Sitzschiene 102 (und damit des gesamten Sitzgestells) bezüglich der karosserieseitigen Schiene 101 nichts mehr entgegensteht.

## Patentansprüche

1. Kraftfahrzeugsitz mit
- einem Sitzgestell (G),
- einer Längsführung (101, 102), mit der das Sitzgestell (G) zur Einstellung der Sitzlängsposition in Sitzlängsrichtung (L) bewegbar ist,
- einer Feststellvorrichtung (120) zum Arretieren des Sitzgestells (G) in einer zuvor eingestellten Sitzlängsposition,
- einem Betätigungselement (120b) zum Entriegeln der Feststellvorrichtung (120), so daß das Sitzgestell (G) in Sitzlängsrichtung (L) bewegt werden kann,
- einem gemeinsam mit dem Sitzgestell (G) in Sitzlängsrichtung (L) bewegbaren Auslösemechanismus (109), der auf das Betätigungselement (120b) einwirken und die Feststellvorrichtung (120) entriegelen kann,
- einer Memory-Einrichtung (104, 105, 107), mittels der das Sitzgestell (G) bei einer Bewegung in Sitzlängsrichtung automatisch in einer vorgebbaren, als Memory-Position definierten Sitzlängsposition angehalten werden kann,
- Einstellmitteln (105) der Memory-Einrichtung (104, 105, 107), mit denen die Memory-Position in Sitzlängsrichtung (L) einstellbar ist, und
- einer Verriegelungsvorrichtung (104, 107) der Memory-Einrichtung (104, 105, 107) zum Verriegeln einer eingestellten Memory-Position,
**dadurch gekennzeichnet,**
**daß** ein durch den Auslösemechanismus (109) bewegbares erstes Eingriffselement (195) vorgesehen ist, dem ein an der Memory-Einrichtung (104, 105, 107) vorgesehenes zweites Eingriffselement (145) zugeordnet ist, und daß die beiden Eingriffselemente (145, 195) miteinander in Eingriff stehen, wodurch die Eingriffselemente (145, 195) eine Bewegung des Sitzgestells (G) in Sitzlängsrichtung (L) verhindern, wenn
a) das Sitzgestell (G) sich in seiner Memory-Position befindet,
b) die Verriegelungsvorrichtung (104, 107) verriegelt ist und
c) die Feststellvorrichtung (120) mittels des Auslösemechanismus (109) nicht vollständig, aber bereits soweit entriegelt ist, daß eine Bewegung des Sitzgestells (G) in Sitzlängsrichtung (L) möglich wäre.

2. Kraftfahrzeugsitz mit
- einem Sitzgestell (G),
- einer Rückenlehne (R), die schwenkbar an dem Sitzgestell (G) gelagert und in Richtung auf eine Sitzfläche des Sitzgestells (G) vorklappbar ist,
- einer Längsführung (101, 102), mit der das Sitzgestell (G) zur Einstellung der Sitzlängsposition in Sitzlängsrichtung (L) bewegbar ist,
- einer Feststellvorrichtung (120) zum Arretieren des Sitzgestells (G) in einer zuvor eingestellten Sitzlängsposition,
- einem Betätigungselement (120b) zum Entriegeln der Feststellvorrichtung (120), so daß das Sitzgestell (G) in Sitzlängsrichtung (L) bewegt werden kann,
- einem gemeinsam mit dem Sitzgestell (G) in Sitzlängsrichtung (L) bewegbaren Koppelmechanismus, der auf das Betätigungselement (120b) einwirkt und die Feststellvorrichtung (120) entriegelt, wenn die Rückenlehne (R) auf die Sitzfläche vorgeklappt ist,
- einer Memory-Einrichtung (104, 105, 107), mittels der das Sitzgestell (G) bei einer Bewegung in Sitzlängsrichtung automatisch in einer vorgebbaren, als Memory-Position definierten Sitzlängsposition angehalten werden kann,
- Einstellmitteln (105) der Memory-Einrichtung (104, 105, 107), mit denen die Memory-Position in Sitzlängsrichtung (L) einstellbar ist und
- einer Verriegelungsvorrichtung (104, 107) der Memory-Einrichtung (104, 105, 107) zum Verriegeln einer eingestellten Memory-Position,
**dadurch gekennzeichnet,**
**daß** ein durch den Koppelmechanismus bewegbares erstes Eingriffselement (195) vorgesehen ist, dem ein an der Memory-Einrichtung (104, 105, 107) vorgesehenes zweites Eingriffselement (145) zugeordnet ist, und daß die beiden Eingriffselemente (145, 195) miteinander in Eingriff stehen, wodurch die Eingriffselemente (145, 195) eine Bewegung des Sitzgestells (G) in Sitzlängsrichtung (L) verhindern, wenn
a) das Sitzgestell (G) sich in seiner Memory-Position befindet,
b) die Verriegelungsvorrichtung (104, 107) verriegelt ist und
c) die Feststellvorrichtung (120) mittels des Koppelmechanismus nicht vollständig, aber bereits soweit entriegelt ist, daß eine Bewegung des Sitzgestells (G) in Sitzlängsrichtung (L) möglich wäre.

3. Kraftfahrzeugsitz nach Anspruch 2, **dadurch gekennzeichnet, daß** das erste Eingriffselement (195) am Koppelmechanismus angeordnet ist.

4. Kraftfahrzeugsitz nach Anspruch 2 oder 3, **dadurch gekennzeichnet, daß** das erste Eingriffselement (195) an einem Hebel (191) angeordnet ist, der zum Einwirken des Koppelmechanismus auf die Feststellvorrichtung (120) vorgesehen ist.

5. Kraftfahrzeugsitz nach einem der Ansprüche 2 bis 4, **dadurch gekennzeichnet, daß** das zweite Entriegelungselement (145) an der Verriegelungsvorrichtung (104, 107) vorgesehen ist.

6. Kraftfahrzeugsitz nach einem der Ansprüche 2 bis 5, **dadurch gekennzeichnet, daß** die Verriegelungsvorrichtung (104, 107) eine zusammen mit einem die Memory-Position definierenden Gegenanschlag (144) der Memory-Einrichtung (104, 105, 107) in Sitzlängsrichtung (L) verschiebbare Verriegelungseinheit (104) aufweist.

7. Kraftfahrzeugsitz nach Anspruch 6, **dadurch gekennzeichnet, daß** der Verriegelungseinheit (104) eine Rasteinrichtung (107) zugeordnet ist, die in Sitzlängsrichtung (L) hintereinander angeordnete Raststellen (170) aufweist, an denen die Verriegelungseinheit (104) bezüglich der Rasteinrichtung (107) verriegelbar ist.

8. Kraftfahrzeugsitz nach Anspruch 7, **dadurch gekennzeichnet, daß** die Verriegelungseinheit eine schwenkbar gelagerte Sperrklinke (104) umfaßt, die ein Rastelement (141) aufweist, das an den Raststellen (170) in die Rasteinrichtung (107) einrasten kann.

9. Kraftfahrzeugsitz nach Anspruch 7 oder 8, **dadurch gekennzeichnet, daß** das zweite Eingriffselement (145) an der Verriegelungseinheit und insbesondere an deren schwenkbar gelagerter Sperrklinke (104) vorgesehen ist.

10. Kraftfahrzeugsitz nach einem der Ansprüche 2 bis 9, **dadurch gekennzeichnet, daß** die Eingriffselemente (145, 195) jeweils Anschläge (146, 147; 196, 197) aufweisen, die zur Herstellung des Eingriffs zwischen den Eingriffselementen (145, 195) miteinander in Wirkverbindung bringbar sind.

11. Kraftfahrzeugsitz nach Anspruch 10, **dadurch gekennzeichnet, daß** eines der Eingriffselemente durch eine Klaue (195) gebildet wird, die das andere Eingriffselement (145) zur Herstellung des Eingriffs umgreift.

12. Kraftfahrzeugsitz nach einem der Ansprüche 2 bis 11, **dadurch gekennzeichnet, daß** die Feststellvorrichtung (120) Sperrzähne (Z) umfaßt, von denen mindestens einer zum Arretieren des Sitzgestells (G) in eine Rastöffnung (Ö) einführbar ist, die zu einer Gruppe in Sitzlängsrichtung (L) entlang der Schienenlängsführung (1, 2) angeordneter Rastöffnungen (Ö) gehört.

13. Kraftfahrzeugsitz nach Anspruch 12, **dadurch gekennzeichnet, daß** die beiden Eingriffselemente (145, 195) dann miteinander in Eingriff stehen, wenn die Sperrzähne (Z) mittels des Koppelmechanismus (190) so weit aus den Rastöffnungen (Ö) ausgehoben sind, daß das Sitzgestell (G) in Sitzlängsrichtung (L) verschiebbar wäre, wobei jedoch die Sperrzähne (Z) über die Ränder (R) der Rastöffnungen (Ö) schleifen würden.

14. Kraftfahrzeugsitz nach einem der Ansprüche 2 bis 13, **dadurch gekennzeichnet, daß** die beiden Eingriffselemente (145, 195) außer Eingriff sind, wenn die Feststellvorrichtung (120) vollständig entriegelt ist.

## Claims

1. Motor vehicle seat with
- a seat frame (G)
- a longitudinal guide (101, 102), with which the seat frame (G) can be moved in the seat longitudinal direction (L) for the adjustment of the seat longitudinal position,
- a fixing device (120) for the locking of the seat frame (G) in a previously adjusted seat longitudinal position,
- an activating element (120b) for the unlocking of the fixing device (120) so that the seat frame (G) can be moved in the seat longitudinal direction (L),
- a release mechanism (109) which can be moved in common with the seat frame (G) in the seat longitudinal direction (L) which can influence the activating element (120b) and unlock the fixing device (120),
- a memory device (104, 105, 107), by means of which the seat frame (G) in the event of a movement in the seat longitudinal direction can be automatically held in a pre-specifiable seat longitudinal position defined as a memory position,
- adjustment means (105) of the memory device (104, 105, 107), with which the memory position can be adjusted in the seat longitudinal direction (L), and
- a locking device (104, 107) of the memory device (104, 105, 107) for the locking of an adjusted memory position,
**characterised in that**
a first engagement element (195) which can be moved by the release mechanism (109) is provided, to which a second engagement element (145) provided on the memory device (104, 105, 107) is assigned, and that both engagement elements (145, 195) are in engagement with each other wherein the engagement elements (145, 195) prevent a movement of the seat frame (G) in the seat longitudinal direction (L) when
a) the seat frame (G) is in its memory position,
b) the locking device (104, 107) is locked and
c) the fixing device (120) by means of the release mechanism (109) is not completely unlocked but already unlocked so far that a movement of the seat frame (G) would be possible in the seat longitudinal direction (L).

2. Motor vehicle seat with
- a seat frame (G)
- a backrest (R) which is swivel mounted on the seat frame (G) and can be folded forwards in the direction of a seat surface of the seat frame (G),
- a longitudinal guide (101, 102), with which the seat frame can be moved in the seat longitudinal direction (L) for the adjustment of the seat longitudinal position,
- a fixing device (120) for the locking of the seat frame (G) in a previously adjusted seat longitudinal position,
- an activating element (120b) for the unlocking of the fixing device (120) so that the seat frame (G) can be moved in the seat longitudinal direction (L),
- a coupling mechanism which can be moved in common with the seat frame (G) in the seat longitudinal direction (L) and which influences the activating element (120b) and unlocks the fixing device (120) when the backrest (R) is folded forward onto the seat surface,
- a memory device (104, 105, 107), by means of which the seat frame (G) in the event of a movement in the seat longitudinal direction can be automatically held in a pre-specifiable seat longitudinal position defined as the memory position,
- adjustment means (105) of the memory device (104, 105, 107), with which the memory position can be adjusted in the seat longitudinal direction (L) and
- a locking device (104, 107) of the memory device (104, 105, 107) for the locking of an adjusted memory position,
**characterised in that**
a first engagement element (195) which can be moved by the coupling mechanism is provided, to which a second engagement element (145) provided on the memory device (104, 105, 107) is assigned, and that both engagement elements (145, 195) are in engagement with each other wherein the engagement elements (145, 195) prevent a movement of the seat frame (G) in the seat longitudinal direction (L) when
a) the seat frame (G) is in its memory position,
b) the locking device (104, 107) is locked and
c) the fixing device (120) by means of the coupling mechanism is not completely unlocked but already unlocked so far that a movement of the seat frame (G) in the seat longitudinal direction (L) would be possible.

3. Motor vehicle seat according to claim 2, **characterised in that** the first engagement element (195) is arranged on the coupling mechanism.

4. Motor vehicle seat according to claim 2 or 3, **characterised in that** the first engagement element (195) is arranged on a lever (191) which is provided for the influencing of the coupling mechanism upon the fixing device (120).

5. Motor vehicle seat according to one of the claims 2 to 4, **characterised in that** the second unlocking element (145) is provided on the locking device (104, 107).

6. Motor vehicle seat according to one of the claims 2 to 5, **characterised in that** the locking device (104, 107) has a locking unit (104) which can be displaced in the seat longitudinal direction (L) together with a counter stop (144) of the memory device (104, 105, 107) defining the memory position.

7. Motor vehicle seat according to claim 6, **characterised in that** that a latch device (107) is assigned to the locking unit (104) which has latch points (170) arranged behind one other in the seat longitudinal direction (L), on which the locking unit (104) can be locked in relation to the latch device (107).

8. Motor vehicle seat according to claim 7, **characterised in that** the locking unit has a swivel mounted locking pawl (104) which has a latch element (141) which can engage in the latch device (107) at the latch points (170).

9. Motor vehicle seat according to claim 7 or 8, **characterised in that** the second engagement element (145) is provided on the locking unit and in particular on the swivel mounted locking pawl (104) of the same.

10. Motor vehicle seat according to one of the claims 2 to 9, **characterised in that** the engagement elements (145, 195) each have catches (146, 147; 196, 197) which can be brought into effective connection with each other for the production of the engagement between the engagement elements (145, 195).

11. Motor vehicle seat according to claim 10, **characterised in that** one of the engagement elements is formed by a claw (195) which engages around the other engagement element (145) for the production of the engagement.

12. Motor vehicle seat according to one of the claims 2 to 11, **characterised in that** the fixing device (12) has locking teeth (Z), of which at least one can be inserted into a latch opening for the locking of the seat frame (G) which belongs to a group of latch openings (Ö) arranged along the track longitudinal guide (1, 2) in the seat longitudinal direction (L).

13. Motor vehicle seat according to claim 12, **characterised in that in that** both engagement elements (145, 195) are in engagement with each other when the locking teeth (Z) by means of the coupling mechanism (19) are lifted so far out of the latch openings (Ö) that the seat frame (G) could be displaced in the seat longitudinal direction (L) wherein, however, the locking teeth (Z) would grind over the edges (R) of the latch openings (O).

14. Motor vehicle seat according to one of the claims 2 to 13, **characterised in that** both engagement elements (145, 195) are disengaged when the fixing device (120) is completely unlocked.

## Revendications

1. Siège d'automobile avec
- une embase de siège (G),
- un guidage longitudinal (101, 102) avec lequel l'embase du siège (G) est déplaçable pour régler la position longitudinale du siège dans le sens longitudinal du siège (L),
- un dispositif de blocage (120) pour arrêter l'embase du siège (G) dans une position longitudinale du siège réglée au préalable,
- un élément d'actionnement (120b) pour déverrouiller le dispositif de blocage (120), de sorte que l'embase du siège (G) puisse être déplacée dans le sens longitudinal du siège (L),
- un mécanisme déclencheur (109) déplaçable avec l'embase de siège (G) dans le sens longitudinal du siège (L) qui peut agir sur l'élément d'actionnement (120b) et qui peut déverrouiller le dispositif de blocage (120),
- un dispositif de mémoire (104, 105, 107) à l'aide duquel une embase de siège (G) lors d'un mouvement dans le sens longitudinal du siège peut être maintenue automatiquement dans une position longitudinale du siège prédéfinissable, définie comme position de mémoire,
- des moyens de réglage (105) du dispositif de mémoire (104, 105, 107), avec lesquels la position de mémoire est réglable dans le sens longitudinal du siège (L), et
- un dispositif de verrouillage (104, 107) du dispositif de mémoire (104, 105, 107) pour verrouiller une position de mémoire réglée,
**caractérisé en ce qu'**un premier élément d'engrenage (195) déplaçable à l'aide d'un mécanisme déclencheur (109) est prévu, qui est affecté à un deuxième élément d'engrenage (145) prévu dans le dispositif de mémoire (104, 105, 107) et **en ce que** les deux éléments d'engrenage (145, 195) sont en prise l'un avec l'autre, les éléments d'engrenage (145, 195) empêchant ainsi un mouvement de l'embase de siège (G) dans le sens longitudinal du siège (L) lorsque
a) l'embase du siège (G) se trouve dans sa position de mémoire,
b) le dispositif de verrouillage (104, 107) est verrouillé, et
c) le dispositif de blocage (120) est déverrouillé au moyen du mécanisme déclencheur (109) non pas totalement, mais déjà suffisamment pour qu'un mouvement de l'embase du siège (G) soit possible dans le sens longitudinal du siège (L).

2. Siège d'automobile avec
- une embase de siège (G)
- un dossier ( R) qui est installé de façon à pivoter sur l'embase du siège (G) et qui est prérabattable sur la surface du siège de l'embase du siège (G),
- un guidage longitudinal (101, 102) avec lequel l'embase du siège (G) est déplaçable pour régler la position longitudinale du siège dans le sens longitudinal du siège (L),
- un dispositif de blocage (120) pour arrêter l'embase du siège (G) dans une position longitudinale du siège réglée au préalable,
- un élément d'actionnement (120b) pour déverrouiller le dispositif de blocage (120), de sorte que l'embase du siège (G) puisse être déplacée dans le sens longitudinal du siège (L),
- un mécanisme de couplage déplaçable avec l'embase de siège (G) dans le sens longitudinal du siège (L) qui agit sur l'élément d'actionnement (120b) et déverrouille le dispositif de blocage (120), lorsque le dossier ( R) est prérabattu sur la surface du siège,
- un dispositif de mémoire (104, 105, 107) à l'aide duquel une embase de siège (G) peut être maintenue automatiquement dans une position longitudinale du siège prédéfinissable, définie comme position de mémoire, lors d'un mouvement dans le sens longitudinal du siège,
- des moyens de réglage (105) du dispositif de mémoire (104, 105, 107), avec lesquels la position de mémoire est réglable dans le sens longitudinal du siège (L), et
- un dispositif de verrouillage (104, 107) du dispositif de mémoire (104, 105, 107) pour verrouiller une position de mémoire réglée,
**caractérisé en ce qu'**un premier élément d'engrenage (195) déplaçable par le mécanisme de couplage est prévu, auquel est subordonné un deuxième élément d'engrenage (145) prévu dans le dispositif de mémoire (104, 105, 107), et **en ce que** les deux éléments d'engrenage (145, 195) sont en prise l'un avec l'autre, les éléments d'engrenage (145, 195) empêchant un déplacement de l'embase du siège (G) dans le sens longitudinal du siège (L), lorsque
a) l'embase du siège (G) se trouve dans sa position de mémoire,
b) le dispositif de verrouillage (104, 107) est verrouillé, et
c) le dispositif de blocage (120) est déverrouillé au moyen du mécanisme de couplage non pas totalement, mais déjà suffisamment pour qu'un mouvement de l'embase du siège (G) soit possible dans le sens longitudinal du siège (L).

3. Siège d'automobile selon la revendication 2, **caractérisé en ce que** le premier élément d'engrenage (195) est disposé sur le mécanisme de couplage.

4. Siège d'automobile selon la revendication 2 ou 3, **caractérisé en ce que** le premier élément d'engrenage (195) est disposé sur un levier (191) qui est prévu pour faire agir le mécanisme de couplage sur le dispositif de blocage (120).

5. Siège d'automobile selon l'une des revendications 2 à 4, **caractérisé en ce que** le deuxième élément de déverrouillage (145) est prévu sur le dispositif de verrouillage (104, 107).

6. Siège d'automobile selon l'une des revendications 2 à 5, **caractérisé en ce que** le dispositif de verrouillage (104, 107) présente une unité de verrouillage (104) pouvant être déplacée dans le sens longitudinal du siège (L) avec une contre-butée (144) du dispositif de mémoire (104, 105, 107) définissant la position de mémoire.

7. Siège d'automobile selon la revendication 6, **caractérisé en ce que** l'unité de verrouillage (104) est subordonnée à un dispositif cranté (107) qui présente dans le sens longitudinal du siège (L) des crans (170) disposés les uns derrière les autres, sur lequel l'unité de verrouillage (104) peut être verrouillée en ce qui concerne le dispositif cranté (107).

8. Siège d'automobile selon la revendication 7, **caractérisé en ce que** l'unité de verrouillage comprend une poignée de blocage (104) présentant un élément cranté (141) qui peut s'encliqueter dans les crans (170) dans le dispositif cranté (107).

9. Siège d'automobile selon la revendication 7 ou 8, **caractérisé en ce que** le deuxième élément d'engrenage (145) est prévu sur l'unité de verrouillage et en particulier sur sa poignée de blocage (104) disposée de façon à pivoter.

10. Siège d'automobile selon l'une des revendications 2 à 9, **caractérisé en ce que** les éléments d'engrenage (145, 195) présentent respectivement des butées (146, 147, 196, 197) qui peuvent être amenées en liaison mécanique les unes avec les autres pour créer l'engrenage entre les éléments d'engrenage (145, 195).

11. Siège d'automobile selon la revendication 10, **caractérisé en ce que** l'un des éléments d'engrenage est formé par une griffe (195) qui s'encliquette dans l'autre élément d'engrenage (145) pour former l'engrenage.

12. Siège d'automobile selon l'une des revendications 2 à 11, **caractérisé en ce que** le dispositif de blocage (120) comprend des dents de blocage (Z) dont au moins une, pour arrêter l'embase du siège (G), peut être introduite dans une ouverture crantée (Ö) appartenant à un groupe d'ouvertures crantées (Ö) disposées dans le sens longitudinal du siège (L) le long du guidage longitudinal sur rails (1, 2).

13. Siège d'automobile selon la revendication 12, **caractérisé en ce que** les deux éléments d'engrenage (145, 195) sont ensuite en prise directe l'un avec l'autre lorsque les dents de blocage (Z) sont relevées à l'aide du mécanisme de couplage (190) suffisamment loin des ouvertures crantées (Ö) pour que l'embase du siège (G) puisse être. déplacée dans le sens longitudinal du siège (L), sachant cependant que les dents de blocage (Z) glisseraient au-dessus des bords (R) des ouvertures crantées (Ö).

14. Siège d'automobile selon l'une des revendications 2 à 13, **caractérisé en ce que** les deux éléments d'engrenage (145, 195) ne sont pas en prise lorsque le dispositif de blocage (120) est totalement déverrouillé.
